# EUROPEAN PATENT APPLICATION

(11) **EP 4 404 439 A1**
(43) Date of publication of application: **24.07.2024**
(21) Application number: 23152711.0
(22) Date of filing: 20.01.2023
(51) Int. Cl.: H02K 5/18, H02K 5/20, H02K 9/19, H02K 9/22, H02K 9/197

(54) **AN ELECTRICAL MACHINE, AND METHOD FOR COOLING SUCH ELECTRICAL MACHINE**

(71) Applicant: VOLVO TRUCK CORPORATION, 405 08 Göteborg (SE)
(72) Inventor: GAO, Feng, 414 78 Göteborg (SE); ALM, Ivar, 475 31 Öckerö (SE); SUSIC, Ronald, 417 61 Göteborg (SE); ANDERSSON, Rasmus, 422 49 Hisings Backa (SE); MANAKSHYA, Nikhil, 417 29 Göteborg (SE); LORD, John, 424 72 Olofstorp (SE)
(74) Representative: Ström & Gulliksson AB

(57) **Abstract**

An electrical machine is provided. The electrical machine **(10)** comprises a housing **(50)** enclosing a rotor **(30)** and a stator **(40),** wherein said stator **(40)** comprises a stator core **(42)** and end turns **(46)** extending axially beyond the stator core **(42).** The electrical machine **(10)** further comprises a first cooling system **(70)** providing a flow of oil **(72)** to the end turns **(46)** of the stator **(40),** and a second cooling system **(80)** having an axial end section overlapping the axial position of the end turns **(46)** of the stator **(40).** The axial end section of the second cooling system **(80)** is provided with one or more cooling fins **(84).**

## Description

### TECHNICAL FIELD

The disclosure relates generally to electrical machines. In particular aspects, the disclosure relates to electrical machines and cooling of such electrical machines. The disclosure can be applied in heavy-duty vehicles, such as trucks, buses, and construction equipment. Although the disclosure may be described with respect to a particular vehicle, the disclosure is not restricted to any particular vehicle.

### BACKGROUND

Electrical machines are normally designed by a fixed stator and a rotor which is supported to rotate relative the stator. The stator has a stator core and end turns projecting axially beyond the stator core. During operation, these end turns will be subject to great heating which needs to be limited in order to allow the electrical machine to operate at the desired performance level. Consequently, various cooling methods have been suggested.

One efficient way of cooling the end turns of the stator is to implement direct oil cooling, which in practice means that the end turns are exposed to a flow of cooling oil. However, it has been realized that the high temperature of the end turns, which could be up to 200°C during certain conditions, may lead to overheating of the cooling oil. Such overheating may result in deteriorated cooling performance and reduced lifetime of the cooling oil.

In view of this, there is need for improved cooling efficiency in electrical machines.

### SUMMARY

According to a first aspect of the disclosure, an electrical machine is provided. The electrical machine comprises a housing enclosing a rotor and a stator, wherein said stator comprises a stator core and end turns extending axially beyond the stator core. The electrical machine further comprises a first cooling system providing a flow of oil to the end turns of the stator, and a second cooling system having an axial end section overlapping the axial position of the end turns of the stator. The axial end section of the second cooling system is provided with one or more cooling fins.

The first aspect of the disclosure may seek to reduce the heat load on the cooling oil used to cool down the end turns of the stator. A technical benefit may include increasing the cooling performance of the electrical machine and increasing the lifetime of the cooling oil.

Optionally, the first cooling system comprises at least one oil outlet for guiding a flow of oil to the end turns of the stator. A technical benefit may include efficient means for guiding cooling oil to the end turns of the stator, ensuring correct flowing of the cooling oil to its desired position.

Optionally, the second cooling system comprises a water jacket. A technical benefit may include efficient cooling using a readily available medium.

Optionally, the at least one oil outlet of the first cooling system is arranged radially inwards of the end turns of the stator. A technical benefit may include the cooling oil flowing outwards during operation of the electrical machine, thereby distributing the cooling oil effectively across the end turns of the stator for improving the cooling of these.

Optionally, the second cooling system is arranged radially outwards of the end turns of the stator. A technical benefit may include improved cooling of the oil, since the second cooling system is arranged in the radially outwards flow path of the cooling oil during operation of the electrical machine.

Optionally, the second cooling system forms part of the housing. A technical benefit may include reducing the number of components for the electrical machine.

Optionally, the one or more cooling fins project radially inwards from the housing. A technical benefit may include reducing the flow path for the cooling oil, thereby also reducing the risk for excessive heating of the cooling oil.

Optionally, the at least one oil outlet of the first cooling system is arranged radially outwards of the end turns of the stator. A technical benefit may include improved access to the first cooling system, as it is at least partly arranged radially outside the end turns.

Optionally, the second cooling system is arranged radially inwards of the end turns of the stator. A technical benefit may include increasing the cooling effect of the oil since the oil flow will have an inward direction.

Optionally, the second cooling system forms part of the rotor. A technical benefit may include using the already existing rotor to function as a cooling means thereby reducing the complexity of the electrical machine.

Optionally, the one or more cooling fins project radially outwards from the rotor. A technical benefit may include reducing the flow path for the cooling oil, thereby also reducing the risk for excessive heating of the cooling oil.

Optionally, the one or more cooling fins extend axially, circumferentially, or in any combination thereof. A technical benefit may include the possibility to adjust the function of the cooling fins as they may be axially straight or slightly twisted relative the rotational axis of the electrical machine, or circumferentially ring-shaped or even helically extending.

Optionally, the first cooling system comprises at least one oil outlet for guiding a flow of oil to the end turns of the stator, wherein the second cooling system comprises a water jacket, wherein the one or more cooling fins extend axially, circumferentially, or in any combination thereof. The at least one oil outlet of the first cooling system is arranged radially inwards of said end turns of the stator, the second cooling system is arranged radially outwards of the end turns of the stator, the second cooling system forms part of the housing, and the one or more cooling fins project radially inwards from the housing. Alternately, the at least one oil outlet of the first cooling system is arranged radially outwards of said end turns of the stator, the second cooling system is arranged radially inwards of the end turns of the stator, the second cooling system forms part of the rotor, and the one or more cooling fins project radially outwards from the rotor.

According to a second aspect of the disclosure, a vehicle is provided. The vehicle comprises the electrical machine according to the first aspect. A technical benefit may include increasing performance and usability of the vehicle.

According to a third aspect, a method for cooling an electrical machine is provided. The method comprises operating a first cooling system to provide a flow of cooling oil to end turns of a stator of the electrical machine. The method further comprises operating a second cooling system to cool the cooling oil after interacting with the end turns of the stator, and removing excess heat from the cooling oil by allowing the cooling oil to flow across one or more cooling fins of the second cooling system.

The disclosed aspects, examples (including any preferred examples), and/or accompanying claims may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

Examples are described in more detail below with reference to the appended drawings.
**FIG. 1** is an exemplary view of a vehicle according to one example.
**FIG. 2A** is an exemplary view of an electrical machine according to an example.
**FIG. 2B** is a cross-sectional view of an electrical machine shown in **FIG. 2A****.**
**FIG. 2C** is a cross-sectional view of an electrical machine according to an example.
**FIG. 2D** is an exemplary view of an electrical machine according to an example.
**FIG. 3A** is an exemplary view of an electrical machine according to a an example.
**FIG. 3B** is a cross-sectional view of an electrical machine according to an example.
FIGS. 4A-D are exemplary views of parts of an electrical machine according to various examples.
**FIG. 5** is a schematic view of a method according to an example.
**FIG. 6** is another view of an electrical machine, according to another example.

### DETAILED DESCRIPTION

The detailed description set forth below provides information and examples of the disclosed technology with sufficient detail to enable those skilled in the art to practice the disclosure.

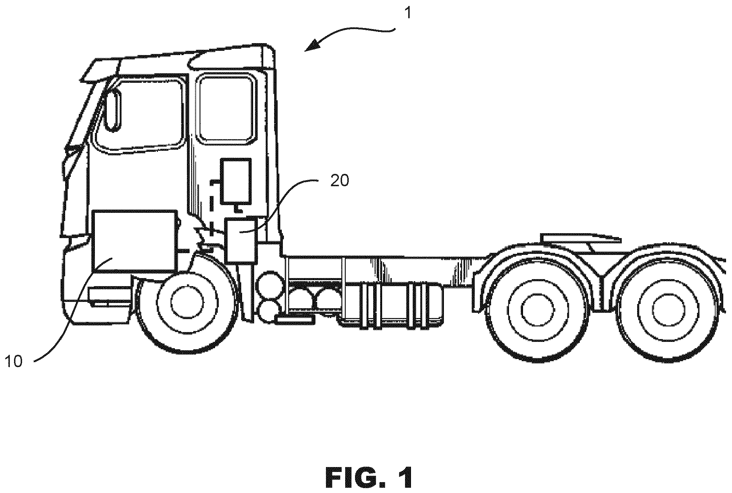

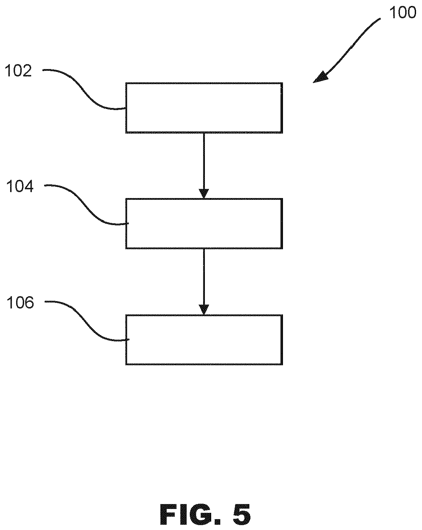

With reference to **FIG. 1****,** a vehicle **1,** here embodied as a heavy duty truck **1,** is disclosed for which an electrical machine **10** and a method **100** (see **FIG. 5****)** for cooling such electrical machine **10** are advantageous. However, the electrical machine **10** and/or the method **100** may as well be implemented in other types of applications, in particular in other types of vehicles such as a busses, light-weight trucks, passenger cars, marine applications, etc.

The vehicle **1** is preferably an electric vehicle, such as a full electric vehicle or a hybrid vehicle, comprising at least one electrical machine **10,** an energy storage system **20** comprising energy storage or energy transformation devices, typically batteries or fuel cells. The energy storage system **20** is arranged and configured to power the electrical machine **10.**

The vehicle **1** typically further comprises other parts of a powertrain such as a transmission, drive shafts, and wheels (not shown in details in **FIG. 1****).**

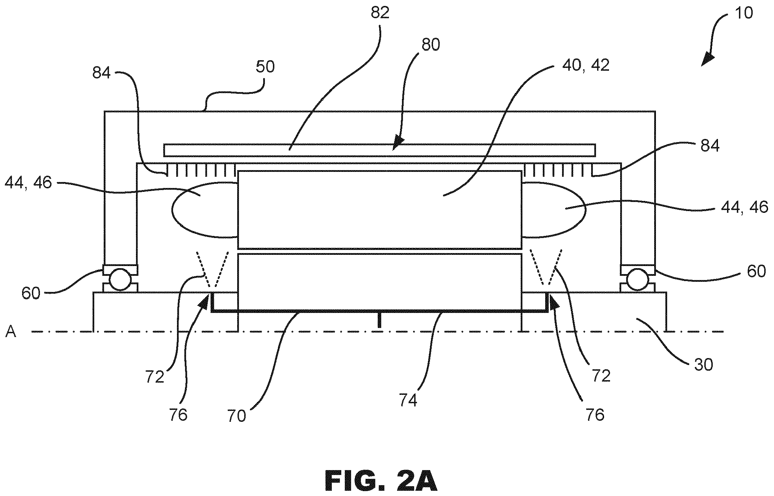

Now turning to **FIG. 2A****,** an example of an electrical machine **10** is shown in cross-section. Due to the rotational symmetry of the electrical machine **10,** only one half of the electrical machine **10** is shown. The electrical machine **10** is configured to, when activated, rotate around rotational axis **A.**

The electrical machine **10** comprises a rotor **30** and a stator **40.** The electrical machine **10** further comprises a fixed housing **50** enclosing the rotor **30** and the stator **40.** As can be seen in **FIG. 2A** the rotor **30** is arranged at an inner radius and the stator **40** surrounds the rotor **30.**

The rotor **30** is rotationally supported by the housing **50** using one or more bearings **60.** It should be understood that other alternatives for supporting the rotor **30** could be considered.

The stator **40** is formed by a stator core **42** supporting a plurality of windings **44.** Each axial end of the windings **44** forms end turns **46,** which project axially beyond the stator core **42.**

In order to cool down the end turns **46** of the stator **40** a first cooling system **70** is provided. The first cooling system **70** is configured to direct a flow of cooling oil **72** towards the end turns **46.** In the shown example, the first cooling system **70** is arranged as part of the rotor **30.**

The first cooling system **70** comprises an oil conduit **74** arranged inside or at the rotor **30.** The oil conduit **74** terminates in one or more oil outlets **76** which are arranged at an axial position corresponding to the axial position of the end turns **46** of the stator **40.** Hence, as oil **72** exits the first cooling system **70** through the one or more oil outlets **76** the oil will flow to the end turns **46** of the stator **40,** thereby cooling down the end turns **46.**

Preferably, the first cooling system **70** comprises a plurality of oil outlets **76** distributed along the circumference on opposite sides of the rotor **30** such that end turns **46** on each side of the stator core **42** will be subject to the flow of cooling oil **72.** On each side of the rotor **30** the plurality of oil outlets **76** may e.g. be arranged at the same axial position, such that the oil outlets **76** form a ring of outlets on each side of the rotor **30.**

As explained above the cooling oil **72** may be significantly heated by the end turns **46** of the stator **40** and for that reason it is desired to lower the temperature of the cooling oil **72.** For this purpose the electrical machine **10** comprises a second cooling system **80.** In this example the second cooling system **80** is formed by a water jacket **82** arranged at the housing **50** and extending, in an axial direction, at least to overlap the axial positions of the end turns **46** of the stator **40.** By cooling down the housing **50,** the second cooling system will assist in reducing the temperature of the end turns **46** of the stator **40.**

The second cooling system further comprising one or more cooling fins **84.** The cooling fins **84** are preferably arranged on opposite axial sides, such that one set of cooling fins **84** axially overlaps the end turns **46** on one side of the stator core **42,** while another set of cooling fins **84** axially overlaps the end turns **46** on the opposite side of the stator core **42.** In the shown example, the cooling fins **84** are provided as concentric fins attached to the housing **50** and extending radially inwards towards the end turns **46.**

As the rotor **30** rotates the oil **72** will be ejected from the oil outlets **76** and hit the end turns **46** of the stator **40** to cool these. The cooling oil **72** will then splash onto the cooling fins **84** of the second cooling system **80** whereby the temperature of the cooling oil **72** will be effectively reduced.

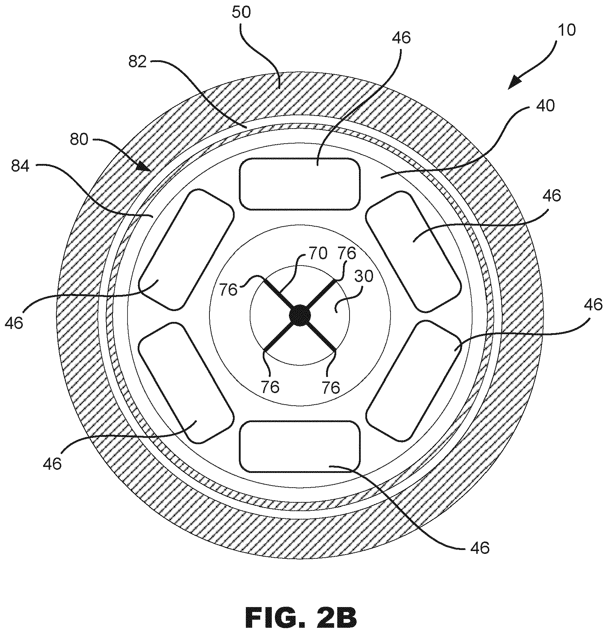

The example shown in **FIG. 2A** is further shown in cross-section **in** **FIG. 2B****.** In this example the stator **40** comprises six poles, each represented by a respective end turn **46.** It should however be realized that the stator **40** may be designed with any number of suitable poles, as is well known in the art.

Further, in the shown example the first cooling system **70** comprises four oil outlets **76** evenly distributed along the circumference of the rotor **30.** It should however be realized that the number of oil outlets **76** could be different, ranging from 1 and upwards.

The water jacket **82** of the second cooling system **80** is shown to extend around the entire stator **40.** Other alternatives are possible, e.g. the water jacket **82** may be split into several sections extending axially and/or circumferentially or in any other possible way to provide the desired cooling effect.

The circumferential ring-shaped cooling fins **84** are arranged at a certain distance from the end turns **46** of the stator **40.** Preferably the distance should be kept small in order to reduce the overall size of the electrical machine **10,** however the distance should preferably be large enough to avoid electrical breakdown between the end turns **46** and the stator housing **50.** Optionally, the cooling fins **84** may not extend around the entire circumference of the stator **40** but each cooling fin **84** could in some examples by divided into several segments. Preferably, each cooling fins segment is circumferentially aligned with a correspond pole of the stator **40.**

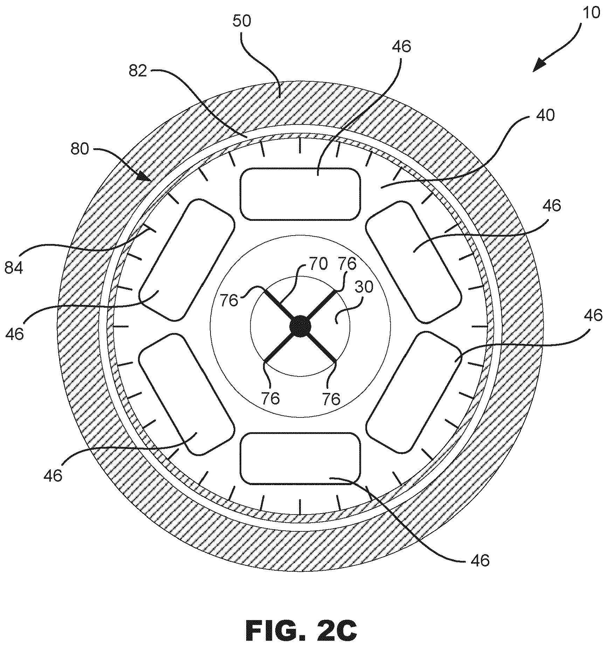

In **FIG. 2C** another example of an electrical machine **10** is shown. The electrical machine **10** is identical to the electrical machine **10** shown in **FIG. 2B** except for the cooling fins **84.** As shown in **FIG. 2C** the cooling fins **84** are not ring shaped, but instead the cooling fins **84** are provided as axially extending plates distributed along the inner circumference of the housing **50.** The exact configuration and number of cooling fins **84** may vary depending on the specific application, number of stator poles, etc. For example, the axial length of each cooling fin **84** may be matched with the axial length of the end turns **46.** In other examples the axial length of each cooling fin **84** is larger or smaller than the axial length of the end turns **46.**

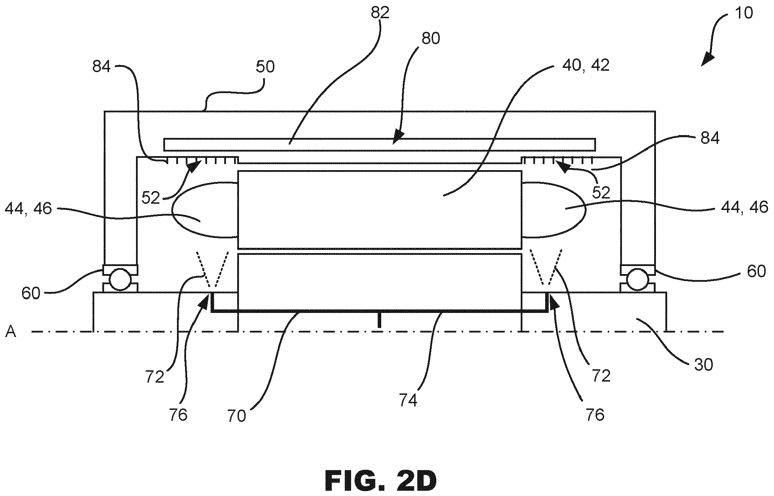

In **FIG. 2D** another example of an electrical machine **10** is shown. The electrical machine **10** is similar to the electrical machine shown in **FIG. 2A****,** except for the position of the cooling fins **84.** In order to ensure a sufficient clearance distance between housing **50** and the end turns **46,** and thereby avoiding arcing or electrical breakdown, the housing **50** is provided with a circumferential recess **52** at the axial position of each end turn **46.** The recess **52** is formed radially outwards, such that the distance between the housing **50** and the end turns **46** is increased at the recesses **52.** The cooling fins **84** are arranged at the recesses **52,** such that a sufficient radial distance between the cooling fins **84** and the end turns **46** is ensured. Preferably, in this example the depth of the recess **52** is substantially equal to the height of the cooling fins **84.**

Both referring to **FIGS. 2A** and **2D****,** the design of the cooling fins **84** can be varied according to specific requirements. The height of the cooling fins **84** may be made relatively large or relatively small, depending on the needed clearance between the end turns **46** and the housing **50.**

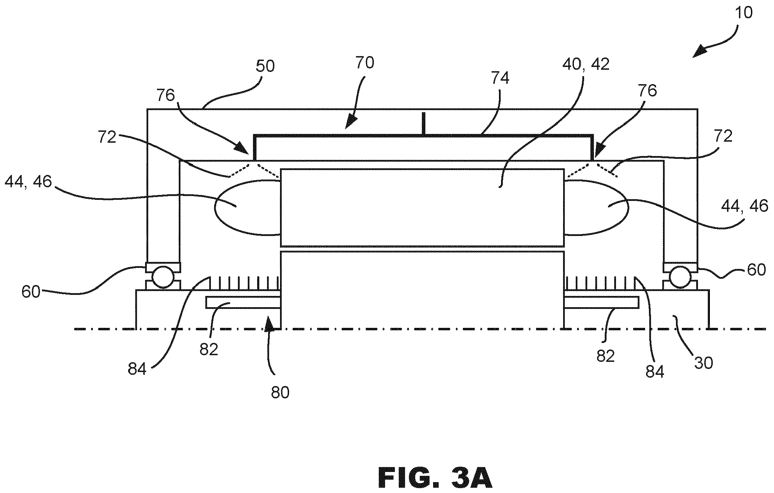

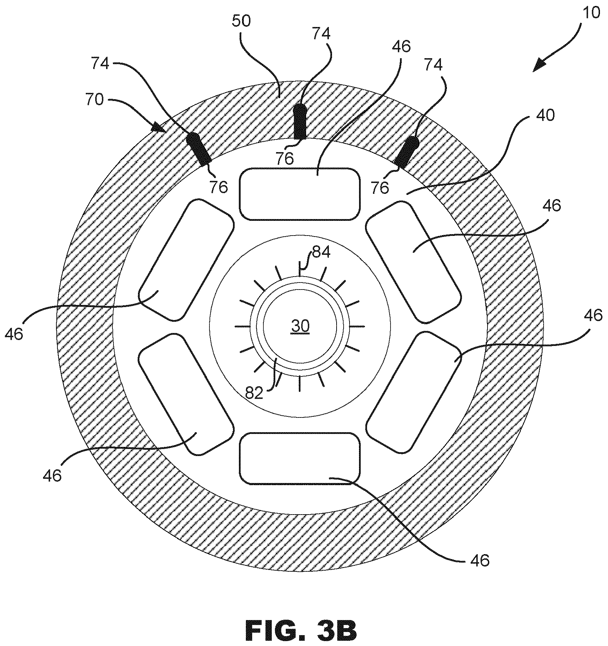

Another example of an electrical machine **10** is shown in **FIGS. 3A** and **3B****.** The electrical machine **10** is similar to the electrical machine **10** shown in **FIG. 2A****,** but the respective position of the first and second cooling system **70, 80** has been changed.

The first cooling system **70,** configured to direct a flow of cooling oil **72** to the end turns **46** of the stator **40,** is here forming part of the housing **50** such that the cooling oil **72** flows from a radially outside position and inwards to hit the end turns **46** of the stator **40.** The number of oil outlets **76** may, as previously been explained, vary and their axial position is preferably aligned with the axial positions of the end turns **46.**

As shown in **FIG. 3B** the number of oil outlets **76** is three, arranged at the upper part of the housing **50.** However the exact number of oil outlets **76** may be more or less, depending on specific requirements and design considerations.

The second cooling system **80,** including the water jacket **82** and the plurality of cooling fins **84,** is forming part of the rotor **30** such that the end turns **46** of the stator **40** are arranged in between the first and second cooling systems **70, 80.** The water jacket **82** extends at least partly along the axial extension of the rotor **30,** in the shown example the water jacket **82** axially overlaps the cooling fins **84.**

As is shown in **FIG. 3A** the cooling fins **84** are arranged as concentric cooling fins **84** protruding radially out from the rotor **30.** In **FIG. 3B** the cooling fins **84** are not ring shaped, but instead the cooling fins **84** are provided as axially extending plates distributed along the outer circumference of the rotor **30.** The exact configuration and number of cooling fins **84** may vary depending on the specific application, number of stator poles, rotor size, etc. For example, the axial length of each cooling fin **84** may be matched with the axial length of the end turns **46.** In other examples the axial length of each cooling fin **84** is larger or smaller than the axial length of the end turns **46.**

As the electrical machine **10** is running the first cooling system **70** will cause cooling oil **72** to hit the end turns **46,** which consequently will result in exchange of thermal energy between the end turns **46** and the cooling oil **72.** As the cooling oil **72** flows further inwards towards the rotor **30,** the cooling oil **72** will hit the cooling fins **84** thereby effectively cooling down the oil **72.**

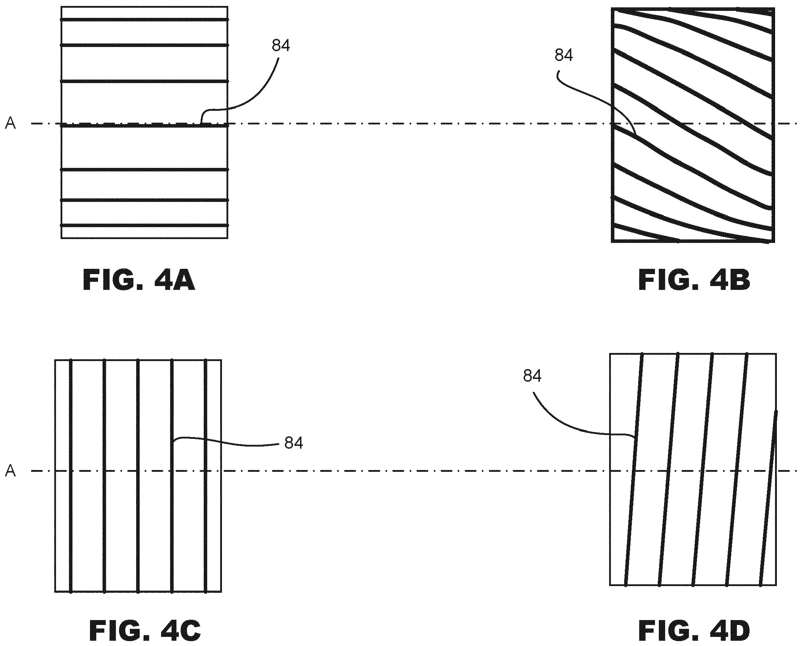

In **FIGS. 4A-4D** different examples of the cooling fins **84** are shown. In **FIG. 4A** the cooling fins **84** extend axially, such as described with reference to **FIG. 2C****.** In another example, the cooling fins **84** of the second cooling system **80** extend axially but slightly twisted in relation to the rotational axis **A.** Such example is shown in **FIG. 4B****.**

In FIG. **4C** the cooling fins **84** extend circumferentially, such as described with reference to **FIG. 2A****,** **FIG. 2B****,** and **FIG. 3****.** In a further example, the cooling fins **84** of the second cooling system **80** extend circumferentially but slightly twisted in relation to the rotational axis **A.** Such example is shown in **FIG. 4D****.**

Now turning to **FIG. 5** a method **100** for an electrical machine **10** is schematically shown. The method **100** comprises operating **102** a first cooling system **70** to provide a flow of cooling oil **72** to end turns **46** of a stator **40** of the electrical machine **10.** The method **100** further comprises operating **104** a second cooling system **80** to cool the cooling oil **72** after interacting with the end turns **46** of the stator **40,** and removing **106** excess heat from the cooling oil **72** by allowing the cooling oil **72** to flow across one or more cooling fins **84** of the second cooling system **80.**

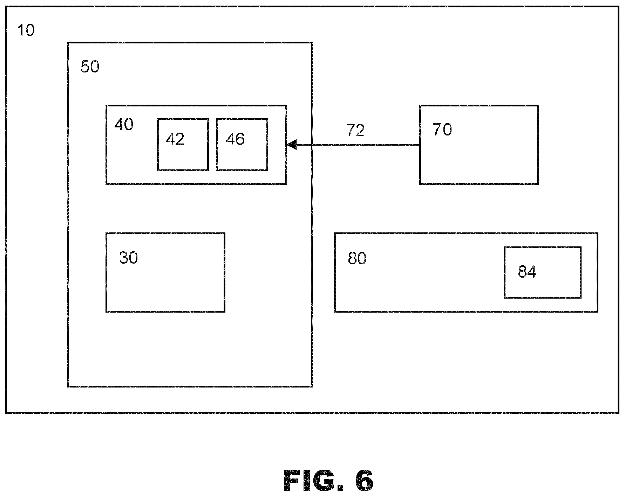

**FIG. 6** is another view of an electrical machine **10,** according to another example. The electrical machine **10** comprises a housing **50** enclosing a rotor **30** and a stator **40,** wherein said stator **40** comprises a stator core **42** and end turns **46** extending axially beyond the stator core **42.** The electrical machine **10** further comprises a first cooling system **70** providing a flow of oil **72** to the end turns **46** of the stator **40,** and a second cooling system **80** having an axial end section overlapping the axial position of the end turns **46** of the stator **40.** The axial end section of the second cooling system **80** is provided with one or more cooling fins **84.**

Example 1: An electrical machine, comprising a housing **50** enclosing a rotor **30** and a stator **40,** wherein said stator **40** comprises a stator core **42** and end turns **46** extending axially beyond the stator core **42,** wherein the electrical machine **10** further comprises: a first cooling system **70** providing a flow of oil **72** to the end turns **46** of the stator **40,** and a second cooling system **80** having an axial end section overlapping the axial position of the end turns **46** of the stator **40,** wherein the axial end section of the second cooling system **80** is provided with one or more cooling fins **84.**

Example 2: The electrical machine of Example 1, wherein the first cooling system **70** comprises at least one oil outlet **76** for guiding a flow of oil **72** to the end turns **46** of the stator **40.**

Example 3: The electrical machine of any of Examples 1-2, wherein the second cooling system **80** comprises a water jacket **82.**

Example 4: The electrical machine of any of Examples 2-3, wherein the at least one oil outlet **76** of the first cooling system **70** is arranged radially inwards of said end turns **46** of the stator **40.**

Example 5: The electrical machine of Example 4, wherein the second cooling system **80** is arranged radially outwards of the end turns **46** of the stator **40.**

Example 6: The electrical machine of Example 4 or 5, wherein the second cooling system **80** forms part of the housing **50.**

Example 7: The electrical machine of any of Examples 4-6, wherein the one or more cooling fins **84** project radially inwards from the housing **50.**

Example 8: The electrical machine of any of Examples 2-3, wherein the at least one oil outlet **76** of the first cooling system **70** is arranged radially outwards of said end turns **46** of the stator **40.**

Example 9: The electrical machine of Example 8, wherein the second cooling system **80** is arranged radially inwards of the end turns **46** of the stator **40.**

Example 10: The electrical machine of Example 8 or 9, wherein the second cooling system **80** forms part of the rotor **30.**

Example 11: The electrical machine of any of Examples 8-10, wherein the one or more cooling fins **80** project radially outwards from the rotor **30.**

Example 12: The electrical machine of any of Example 1-11, wherein the one or more cooling fins **84** extend axially.

Example 13: The electrical machine of any of Example 1-11, wherein the one or more cooling fins **84** extend circumferentially.

Example 14: The electrical machine of any of Example 1-11, wherein the one or more cooling fins **84** extend axially and circumferentially.

Example 15: The electrical machine of Example 1, wherein the first cooling system **70** comprises at least one oil outlet **76** for guiding a flow of oil **72** to the end turns **46** of the stator **40,** wherein the second cooling system **80** comprises a water jacket **82,** wherein the one or more cooling fins **84** extend axially, circumferentially, or in any combination thereof, and wherein the at least one oil outlet **76** of the first cooling system **70** is arranged radially inwards of said end turns **46** of the stator **40,** the second cooling system **80** is arranged radially outwards of the end turns **46** of the stator **40,** the second cooling system **80** forms part of the housing **50,** and the one or more cooling fins **84** project radially inwards from the housing **50,** or wherein the at least one oil outlet **76** of the first cooling system **70** is arranged radially outwards of said end turns **46** of the stator **40,** the second cooling system **80** is arranged radially inwards of the end turns **46** of the stator **40,** the second cooling system **80** forms part of the rotor **30,** and the one or more cooling fins **84** project radially outwards from the rotor **30.**

Example 16: A vehicle comprising the electrical machine **10** according to any of Example 1-15.

Example 17: A method **100** for cooling an electrical machine, comprising: operating a first cooling system to provide a flow of cooling oil to end turns of a stator of the electrical machine, operating a second cooling system to cool the cooling oil after interacting with the end turns of the stator, and removing excess heat from the cooling oil by allowing the cooling oil to flow across one or more cooling fins of the second cooling system.

Example 18: The method according to Example 17, wherein the flow of oil from the first cooling system is a radial flow.

Example 19: The method according to Example 17 or 18, wherein the first cooling system provides a flow of cooling oil directed radially inwards.

Example 20: The method according to Example 17 or 18, wherein the first cooling system provides a flow of cooling oil directed radially outwards.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. An electrical machine, comprising a housing **(50)** enclosing a rotor **(30)** and a stator **(40),** wherein said stator **(40)** comprises a stator core **(42)** and end turns **(46)** extending axially beyond the stator core **(42),**
wherein the electrical machine **(10)** further comprises:
a first cooling system **(70)** providing a flow of oil **(72)** to the end turns **(46)** of the stator **(40),** and
a second cooling system **(80)** having an axial end section overlapping the axial position of the end turns **(46)** of the stator **(40),**
wherein the axial end section of the second cooling system **(80)** is provided with one or more cooling fins **(84).**

2. The electrical machine of claim 1, wherein the first cooling system **(70)** comprises at least one oil outlet **(76)** for guiding a flow of oil **(72)** to the end turns **(46)** of the stator **(40).**

3. The electrical machine of any of claims 1-2, wherein the second cooling system **(80)** comprises a water jacket **(82).**

4. The electrical machine of claim 2, wherein the at least one oil outlet **(76)** of the first cooling system **(70)** is arranged radially inwards of said end turns **(46)** of the stator **(40).**

5. The electrical machine of claim 4, wherein the second cooling system **(80)** is arranged radially outwards of the end turns **(46)** of the stator **(40).**

6. The electrical machine of claim 4 or 5, wherein the second cooling system **(80)** forms part of the housing **(50).**

7. The electrical machine of any of claims 4-6, wherein the one or more cooling fins **(84)** project radially inwards from the housing **(50).**

8. The electrical machine of claim 2, wherein the at least one oil outlet **(76)** of the first cooling system **(70)** is arranged radially outwards of said end turns **(46)** of the stator **(40).**

9. The electrical machine of claim 8, wherein the second cooling system **(80)** is arranged radially inwards of the end turns **(46)** of the stator **(40).**

10. The electrical machine of claim 8 or 9, wherein the second cooling system **(80)** forms part of the rotor **(30).**

11. The electrical machine of any of claims 8-10, wherein the one or more cooling fins **(80)** project radially outwards from the rotor **(30).**

12. The electrical machine of any of claim 1-11, wherein the one or more cooling fins **(84)** extend axially, circumferentially, or in any combination thereof.

13. The electrical machine of claim 1, wherein the first cooling system **(70)** comprises at least one oil outlet **(76)** for guiding a flow of oil **(72)** to the end turns **(46)** of the stator **(40),** wherein the second cooling system **(80)** comprises a water jacket **(82),** wherein the one or more cooling fins **(84)** extend axially, circumferentially, or in any combination thereof, and
wherein the at least one oil outlet **(76)** of the first cooling system **(70)** is arranged radially inwards of said end turns **(46)** of the stator **(40),** the second cooling system **(80)** is arranged radially outwards of the end turns **(46)** of the stator **(40),** the second cooling system **(80)** forms part of the housing **(50),** and the one or more cooling fins **(84)** project radially inwards from the housing **(50),** or
wherein the at least one oil outlet **(76)** of the first cooling system **(70)** is arranged radially outwards of said end turns **(46)** of the stator **(40),** the second cooling system **(80)** is arranged radially inwards of the end turns **(46)** of the stator **(40),** the second cooling system **(80)** forms part of the rotor **(30),** and the one or more cooling fins **(84)** project radially outwards from the rotor **(30).**

14. A vehicle comprising the electrical machine **(10)** according to any of claims 1-13.

15. A method **(100)** for cooling an electrical machine, comprising:
operating a first cooling system to provide a flow of cooling oil to end turns of a stator of the electrical machine,
operating a second cooling system to cool the cooling oil after interacting with the end turns of the stator, and
removing excess heat from the cooling oil by allowing the cooling oil to flow across one or more cooling fins of the second cooling system.
